# EUROPÄISCHE PATENTSCHRIFT

(11) **EP 2 540 533 B1**
(45) Veröffentlichungstag und Bekanntmachung des Hinweises auf die Patenterteilung: **09.08.2017**
(21) Anmeldenummer: 12004479.7
(22) Anmeldetag: 14.06.2012
(51) Int. Cl.: B60G 3/28, B60G 7/00, B60G 11/08, B60G 11/10, B60G 11/36

(54) **Radaufhängung für ein Fahrzeug**
Wheel suspension for a vehicle
Suspension de roue pour un véhicule

(30) Priorität: 28.06.2011 DE 102011105619
(43) Veröffentlichungstag der Anmeldung: 02.01.2013
(73) Patentinhaber: Audi AG, 85045 Ingolstadt (DE)
(72) Erfinder: Müller, Hugo, 86701 Rohrenfels-Ballersdorf (DE); Schmidt, Walter, 86643 Rennertshofen (DE); Schmid, Wolfgang, 85354 Freising (DE)

(56) Entgegenhaltungen:
- EP-A1- 0 218 322
- DE-A1- 3 243 434
- DE-A1-102006 022 151
- DE-A1-102007 007 181
- DE-A1-102011 006 874
- FR-A1- 2 503 054
- US-A- 4 653 772
- US-A- 4 779 893
- US-A1- 2002 000 703

## Beschreibung

Die Erfindung betrifft eine Radaufhängung für ein Fahrzeug nach dem Oberbegriff des Patentanspruches 1. Ein Beispiel einer solchen Radaufhängung ist aus der De 10 2007 007181 A1 bekannt.

Feder- und Dämpferbeine von Radaufhängungen eines Fahrzeugs werden durch die an den Fahrzeugrädern angreifenden Kräfte auf Biegung beansprucht, aus der sich zwischen der Kolbenstange des Dämpfers und dem Dämpferrohr eine erhöhte Reibung ergibt. Dies kann bei einer Dämpferbeinachse zu einem sogenannten Stick-Slip-Effekt führen, d.h. zu einem Verklemmen der Kolbenstange im Dämpferrohr, wodurch die Ansprechempfindlichkeit des Dämpfers reduziert wird.

Zur Reduzierung derartiger Effekte ist aus der DE 102 006 022 151 A1 eine Radaufhängung für ein Fahrzeug bekannt, bei der der Radträger über eine von Radführungselementen getragene Zusatzfeder abgestützt ist. Mithilfe dieser Zusatzfeder wird dem sich durch die Radaufstandskraft ergebenden, auf den Dämpfer wirkenden Kippmoment entgegengewirkt.

Die aus der DE 102 006 022 151 A1 bekannte Radaufhängung weist neben der Zusatzfeder und dem Dämpfer eine Tragfeder auf. Sowohl die Zusatzfeder als auch die Tragfeder sind als großvolumige Schraubendruckfedern ausgeführt, die einen entsprechend gesteigerten Raumbedarf aufweisen, der zu Package-Problemen führen kann.

Die Aufgabe der Erfindung besteht darin, eine Radaufhängung für ein Fahrzeug bereitzustellen, bei der mit reduziertem Bauraumaufwand einer die Ansprechempfindlichkeit des Dämpfers beeinträchtigenden Durchbiegung des Dämpfers entgegengewirkt wird.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, das die oben in der Beschreibungseinleitung gewürdigte Radaufhängung eine Anzahl von Lenkern bzw. Radführungselementen aufweist, über die der Radträger an der Fahrzeugkarosserie angelenkt ist. Dieser Lenkerverbund ergibt in Kombination mit der Zusatzfeder und der Tragfeder eine bauraumintensive Radaufhängung. Vor diesem Hintergrund ist gemäß dem kennzeichnenden Teil des Patentanspruches 1 die Tragfeder nicht mehr als eine separate Schraubendruckfeder ausgebildet, sondern als eine Blattfeder, die die Funktion eines Lenkers übernimmt, auf dem die Zusatzfeder mittelbar abgestützt werden kann. Dadurch erfolgt unter Beibehaltung der Funktionsweise der aus dem Stand der Technik bekannten Radaufhängung eine Bauteilreduzierung, bei der die Tragfeder in Doppelfunktion zusätzlich auch als Radführungselement wirkt und die Zusatzfeder trägt.

Gemäß einer bevorzugten Ausführungsform erstreckt sich die Blattfeder insbesondere in der Fahrzeugquerrichtung und ist an einem radträgerseitigen Anbindungspunkt am Radträger angelenkt. Die Blattfeder wirkt daher wie ein achsführender Lenker, der zusammen mit den anderen Lenkern der Radaufhängung den Radträger führt. Gemäß einer besonders bevorzugten raumsparenden Ausführung also dieser der Lenkerverbund die Blattfeder sowie einen weiteren Lenker, insbesondere einen Längslenker, aufweisen.

Diese sind beide in einer unteren Lenkerebene angeordnet und können zusammen mit einer, an einem Ausleger des Radträgers angelenkten Spurstange den Radträger führen. Die Spurstange ist im Gegensatz zur Blattfeder und zum Längslenker in einer oberen Lenkerebene angeordnet.

Die Blattfeder kann aus einer Anzahl von Flachstahl-Lamellen bestehen, die übereinander angeordnet sind und eine vordefinierte Federrate ergeben. Die Blattfeder kann entlang ihrer Längserstreckung mit in etwa gleichmäßig verteilter Bauteilspannung beaufschlagt sein.

Erfindungsgemäß ist die Zusatzfeder nicht unmittelbar auf der Blattfeder abgestützt, sondern unter Zwischenschaltung eines Längslenkers, der die Zusatzfeder trägt. In diesem Fall ist die zum Beispiel als Schraubenfeder ausgeführte Zusatzfeder mit ihren beiden Fußpunkten jeweils am Längslenker und an einem am Radträger angeformten Hebelarm abgestützt. Dabei ist die Zusatzfeder tragende Lenker an einer Wippachse schwenkbar gelagert, die bevorzugt zwischen seinem karosserieseitigen Anbindungspunkt und der Zusatzfeder angeordnet ist. Beim Einfedern drückt die Fahrzeugkarosserie den karosserieseitigen Anbindungspunkt des an der Wippachse schwenkbar gelagerten Lenkers nach unten, so dass gleichzeitig ein auf der gegenüberliegenden Seite der Wippachse gebildeter Lenker-Ausleger zusammen mit dem unteren Fußpunkt der Zusatzfeder nach oben verlagert wird. Somit wird beim Einfedern die Federkraft der Zusatzfeder zusätzlich durch die Wippbewegung des Lenker-Auslegers nach oben verstärkt. Bei entsprechender Dimensionierung der Zusatzfederkraft sowie der Hebelverhältnisse zwischen der Zusatzfeder und dem karosserieseitigen Anbindungspunkt des die Zusatzfeder tragenden Lenkers kann somit das auf den Dämpfer wirkende Kipp- oder Biegemoment reduziert beziehungsweise vollständig aufgehoben werden.

Die Blattfeder kann an zumindest einer karosserieseitigen Lagerstelle angelenkt sein. Bevorzugt kann sich die Blattfeder über die gesamte Fahrzeugbreite in Querrichtung erstrecken und als eine gemeinsame Blattfeder mit den beiden Radaufhängungen einer Fahrzeugachse zusammenwirken, um das Eigenlenkverhalten, insbesondere das Wankverhalten, des Fahrzeuges zu beeinflussen. In einer bevorzugten Ausführungsvariante kann die gemeinsame Blattfeder als Stabilisator eingesetzt werden. Hierfür sind die Federrate der gemeinsamen Blattfeder sowie der geometrische Ort der Lagerstellen konstruktiv auf das jeweils erforderliche kinematische Verhalten der Radaufhängung anzupassen. Gemäß einer weiteren bauraumreduzierten Radaufhängung kann sich die Blattfeder in etwa achsparallel zur oben genannten Wippachse erstrecken. Bei der erfindungsgemäßen Radaufhängung erfüllt daher die Blattfeder die Funktion sowohl einer Tragfeder, eines achsführenden Lenkers eines Stabilisators als auch eines Zusatzfeder-Trägers.

Die vorstehend erläuterten und/oder in den Unteransprüchen wiedergegebenen vorteilhaften Aus- und/oder Weiterbildungen können - außer zum Beispiel in den Fällen eindeutiger Abhängigkeiten und unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine Radaufhängung für ein Fahrzeugrad in perspektivischer Ansicht;
- Fig. 2: in einer Ansicht von hinten die Radaufhängung gemäß der Fig. 1; und
- Fig. 3: in einer Seitenansicht die Radaufhängung gemäß der Fig. 1.

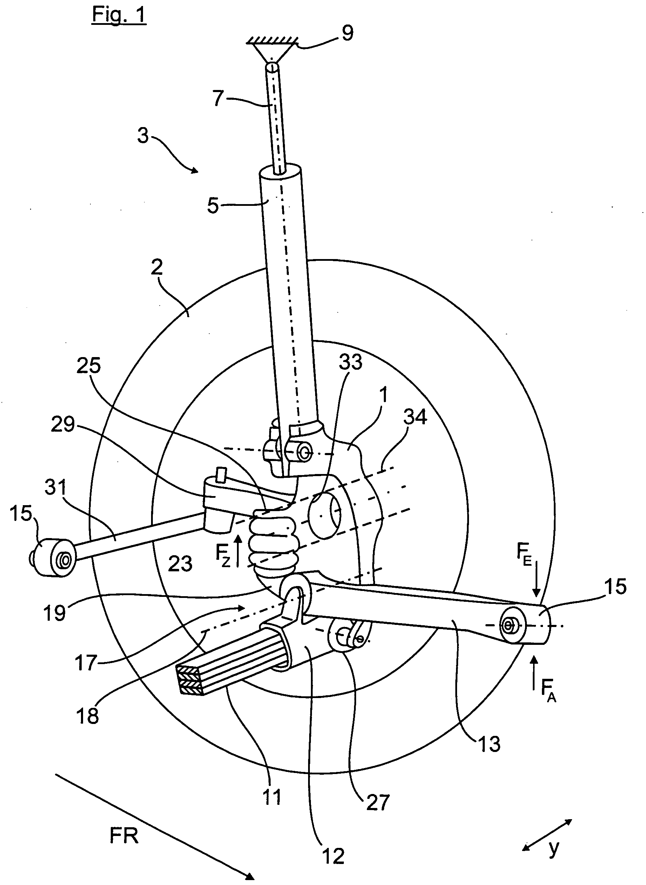

In der Fig. 1 ist gemäß dem ersten Ausführungsbeispiel eine Radaufhängung für eine Hinterachse mit einem nicht dargestellten Hinterradantrieb gezeigt. Die Radaufhängung weist eine McPherson-Achse mit einem halbschalenförmigen Radträger 1 für ein Hinterrad 2 auf. Am oberen Ende des Radträgers 1 ist ein im wesentlichen vertikal angeordnetes Dämpferbein 3 bestehend aus einem Dämpferrohr 5 und einer darin geführten Kolbenstange 7 verschraubt ist. Die Kolbenstange 7 ist an ihrem freien oberen Ende an einer Fahrzeugkarosserie 9 angelenkt.

Der Radträger 1 ist über einen im Wesentlichen in einer unteren Lenkerebene befindlichen Lenkerverbund an der Fahrzeugkarosserie 9 angelenkt. Der Lenkerverbund weist gemäß der Fig. 1 eine sich in der Fahrzeugquerrichtung y erstreckende Blattfeder bzw. Biegefeder 11 auf, die mit ihrem Blattfeder-Endstück 12 nach Art eines Querlenkers an einem radträgerseitigen Anbindungspunkt 27 unten am Radträger 1 angelenkt ist. Die aus Federstahl-Lamellen aufgebaute Blattfeder 11 ist mit einer vordefinierten Federrate ausgelegt und übernimmt als solche die Funktion einer Tragfeder, die anteilig die Fahrzeugaufbau-Masse trägt. Der Lenkerverbund weist außerdem einen im Vergleich zur Blattfeder 11 formsteifen unteren Längslenker 13 auf, der an seinem karosserieseitigen Anbindungspunkt 15 jeweils an einem nicht gezeigten Hilfsrahmen des Fahrzeugaufbaus angelenkt sein kann. Der Längslenker 13 erstreckt sich ausgehend von dem Radträger 1 in der Fahrtrichtung FR nach vorne. Dabei ist der Längslenker 13 an einer Lagerstelle 17 (Fig. 1) oberseitig an der Blattfeder 11 schwenkbar angelenkt und mit einem Ausleger 19 über die Lagerstelle 17 hinaus verlängert. Die Verbindungsachse 18 zwischen der Blattfeder 11 und dem Längslenker 13 bildet somit eine Wippachse, um die der Längslenker 13 wippen kann. Auf der mit Bezug auf die Wippachse 18 gegenüberliegenden Seite des Längslenkers 13 sitzt auf dessen Ausleger 19 eine Zusatzfeder 23, auf deren oberen Fußpunkt sich der Radträger 1 über seinen Hebelarm 25 abstützt.

Gemäß der Fig. 1 weist der aus der Blattfeder 11 und dem Längslenker 13 bestehende Lenkerverbund zusätzlich eine Spurstange 31 auf, die in einer oberen Lenkerebene einen sich mit Bezug auf die Fahrtrichtung FR nach hinten erstreckenden Ausleger 29 auf, an dem eine Spurstange 31 angelenkt ist, die mit ihrem Anbindungspunkt 15 am Fahrzeugaufbau 9 festlegbar ist. Außerdem weist der Radträger 1 eine Montageöffnung 33 auf, durch die eine gestrichelt angedeutete Antriebswelle 34 des Hinterradantriebs geführt ist.

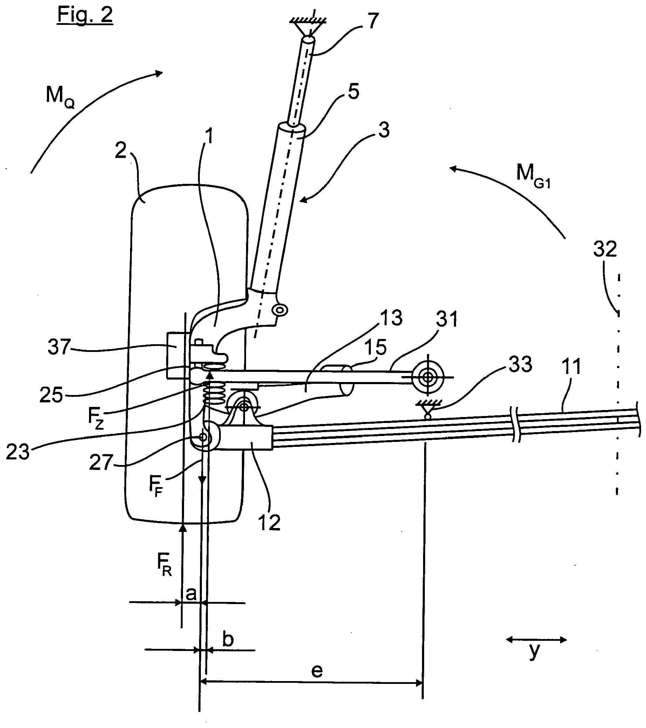

Nachfolgend ist anhand der Fig. 2 die Wirkung der Zusatzfeder 23 zur Reduzierung eines in der Fahrzeugquerrichtung y auf den Stoßdämpfer 3 wirkenden Kippmoments M_{Q} beschrieben: Ein solches Kippmoment M_{Q} ergibt sich gemäß der Fig. 2 durch die Hebellänge a zwischen der am Blattfeder-Anbindungspunkt 27 nach unten wirkenden Gewichtskraft F_{F} und der nach oben gerichteten, in der Fahrzeugrad-Mitte 37 angreifenden Radaufstandskraft F_{R}. Gemäß der Fig. 2 wird über die Blattfeder 11 eine anteilige Gewichtskraft F_{F} des Fahrzeugs in den radträgerseitigen Anbindungspunkt 27 eingeleitet. Als Reaktionskraft ergibt sich die Radaufstandskraft F_{R}. Somit wird das oben genannte Kippmoment M_{Q} erzeugt, das um den Anbindungspunkt 27 herum gemäß der Fig. 2 im Uhrzeigersinn auf den Stoßdämpfer 3 wirkt.

Erfindungsgemäß kann das Kippmoment M_{Q} durch die Zusatzfeder 23 reduziert werden. Die Zusatzfeder 23 stützt den Radträger 1 an seinem Hebelarm 25 mit einer Federkraft F_{Z} gegen das Kippmoment M_{Q} ab. Die Zusatzfeder 23 ist gemäß der Fig. 2 mit Bezug auf den Blattfeder-Anbindungspunkt 27 auf der, der Fahrzeugrad-Mitte 37 gegenüberliegenden Seite angeordnet und über eine Hebellänge b von dem Blattfeder-Anbindungspunkt 27 beabstandet. Somit erzeugt die Zusatzfeder 23 mit ihrer Federkraft F_{Z} und der Hebellänge b ein auf den Radträger 1 wirkendes Gegenmoment M_{G}, das das Kippmoment M_{Q} aufheben kann. Dies bewirkt eine geringere Durchbiegung des Dämpfers 3 und damit geringere Reibungskräfte, wodurch Verklemmungen der Kolbenstange 7 im Dämpferrohr 5 verhindert werden und folglich die Reaktionsfähigkeit des Dämpfers 3 erhöht ist.

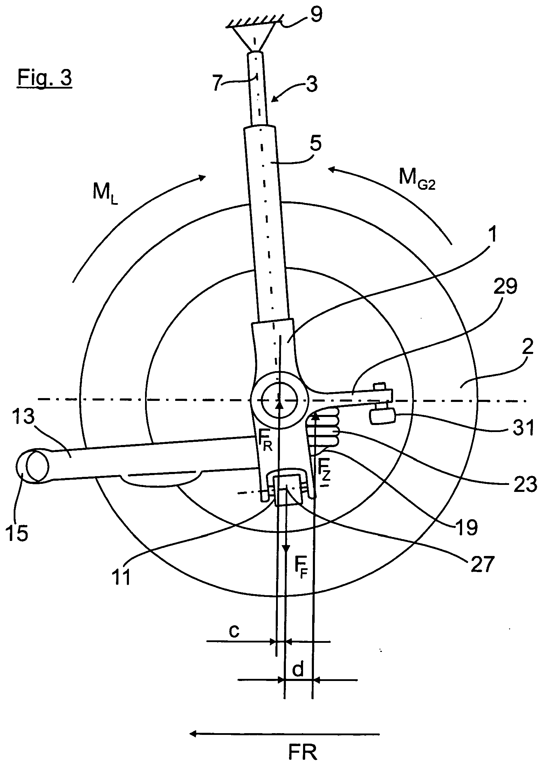

Die Zusatzfeder 23 kann nicht nur das Kippmoment M_{Q} in der Fahrzeugquerrichtung reduzieren, sondern auch ein in der Fahrzeuglängsrichtung am Dämpfer 3 angreifendes Kippmoment M_{L} aufheben, wie es aus der Fig. 3 hervorgeht. Ein solches Kippmoment M_{L} in der Fahrzeuglängsrichtung entsteht, wenn gemäß der Fig. 3 der Blattfeder-Anbindungspunkt 27 gegenüber der Radmitte 37 in der Fahrzeuglängsrichtung FR um eine Hebellänge c nach hinten versetzt ist. Somit wird mit der Radaufstandskraft F_{R} und der Hebellänge c ein Längsmoment M_{L} erzeugt, das gemäß der Fig. 3 im Uhrzeigersinn gegen den Dämpfer 3 wirkt. Wie aus der Fig. 3 hervorgeht, sitzt die Zusatzfeder 23 auf dem Ausleger 19 des Längslenkers 13. Die Zusatzfeder 23 ist somit in der Fahrzeuglängsrichtung FR von dem Lenker-Anbindungspunkt 27 um eine Hebellänge d nach hinten verlagert. Dadurch wird zusammen mit der vertikal nach oben auf den Radträger 1 wirkenden Federkraft F_{Z} ein Gegenmoment M_{G2} erzeugt, das dem Längsmoment M_{L} entgegenwirkt und entsprechend aufheben kann.

Wie aus der Fig. 2 weiter hervorgeht, erstreckt sich die Blattfeder 11 über die mittig verlaufende Fahrzeuglängsachse 32 hinaus bis zur nicht dargestellten gegenüberliegenden Radaufhängung, die mit Bezug auf die Fahrzeuglängsachse 32 spiegelbildlich aufgebaut ist. Gemäß der Fig. 2 wirkt die Blattfeder 11 zusätzlich als Stabilisator. Hierzu ist die Blattfeder 11 an karosserieseitigen Lagerstellen 33 gelagert, von denen in der Fig. 2 nur eine Lagerstelle 33 dargestellt ist. Die beiden Lagerstellen 33 der gemeinsamen Blattfeder 11 sind jeweils über eine Querlenkerlänge e vom radträgerseitigen Anbindungspunkt 27 der Blattfeder 11 beabstandet. Die Querlenkerlänge e sowie die Federrate der Blattfeder 11 sind konstruktiv auf das jeweilige Belastungsprofil der Fahrzeugachse angepasst. Je nach geometrischem Ort der Lagerstellen 33 sowie der eingestellten Federrate kann die Stabilisator-Wirkung der gemeinsamen Blattfeder 11 angepasst werden. In der Fig. 2 ist die Querlenkerlänge e so ausgelegt, dass jede der Lagerstellen 33 der Blattfeder 11 und die karosserieseitigen Anbindungspunkte 15 der Spurstangen 31 vertikal in Flucht zueinander sind, das heißt die Lagerstellen 33 und die karosserieseitigen Anbindungspunkte 15 der Spurstangen 31 liegen in einer gemeinsamen Vertikalebene. Die Querlenkerlänge d ist jedoch nicht auf das in der Fig. 2 gezeigte Ausführungsbeispiel beschränkt. Vielmehr bemisst sich die Querlenkerlänge e in Abhängigkeit von dem beabsichtigten kinematischen Verhalten der Radaufhängung.

Bei einem Anheben des in der Fig. 2 gezeigten Fahrzeugrades 2 (Einfedern) wird das in der Fig. 2 gezeigte Blattfeder-Endstück 12 relativ zum Fahrzeug ebenfalls angehoben. Gleichzeitig wird das sich zwischen den beiden Lagerstellen 33 erstreckende Blattfeder-Mittelstück nach unten durchgebogen, während das in der Fahrzeugquerrichtung y gegenüberliegende Blattfeder-Endstück 12 wiederum angehoben wird. Gleiches gilt auch für ein Absenken des in der Fig. 2 gezeigten Fahrzeugrades 2 (Ausfedern), bei dem das nicht gezeigte gegenüberliegende Fahrzeugrad ebenfalls abgesenkt wird.

## Patentansprüche

1. Radaufhängung für ein Fahrzeug mit einer Tragfeder (11) und einem Dämpfer (3), der mit einem Radträger (1) des Fahrzeugs verbunden ist, der über Radführungselemente an der Fahrzeugkarosserie (9) angelenkt ist, von denen ein Längslenker (13) eine Zusatzfeder (23) trägt, auf die sich der Radträger (1) abstützt und die einem, sich durch die Radaufstandskraft (F_{R}) ergebenden Kippmoment (M_{L}, M_{Q}) auf den Dämpfer (3) entgegenwirkt, wobei der die Zusatzfeder (23) tragende Längslenker (13) an einer Wippachse (18) schwenkbar gelagert ist, wobei die Tragfeder (11) als eine Blattfeder ausgebildet ist, und wobei der den Radträger (1) führende Lenkerverbund aus dem Längslenker (13) und der Blattfeder (11) besteht, die in einer unteren Lenkerebene angeordnet sind, und wobei der Lenkerverbund zusätzlich eine Spurstange (31) aufweist, die in einer oberen Lenkerebene angeordnet ist, **dadurch gekennzeichnet, dass** die Blattfeder (11) als ein Radführungselement am Radträger (1) angelenkt ist und die Zusatzfeder (23) dadurch mittelbar trägt, dass der die Zusatzfeder (23) tragende Längslenker (13) auf der Blattfeder (11) abgestützt ist.

2. Radaufhängung nach Anspruch 1, **dadurch gekennzeichnet, dass** die Blattfeder (11), insbesondere in der Fahrzeugquerrichtung (y) nach Art eines Querlenkers, an einem Anbindungspunkt (27) des Radträgers (1) angelenkt ist.

3. Radaufhängung nach Anspruch 1 oder 2, **dadurch gekennzeichnet, dass** die Wippachse (18) zwischen dem karosserieseitigen Anbindungspunkt (15) des Längslenkers (13) und der Zusatzfeder (23) angeordnet ist.

4. Radaufhängung nach einem der vorhergehenden Ansprüche, **dadurch gekennzeichnet, dass** die Blattfeder (11) an zumindest einer karosserieseitigen Lagerstelle (33) gelagert ist, die um eine Querlenkerlänge (e) vom radträgerseitigen Anbindungspunkt (27) beabstandet ist.

5. Radaufhängung nach einem der vorhergehenden Ansprüche, **dadurch gekennzeichnet, dass** die Blattfeder (11) als Stabilisator wirkt und/oder sich die Blattfeder in der Fahrzeugquerrichtung (y) zwischen gegenüberliegenden Radträgern (1) einer Fahrzeugachse erstreckt.

6. Radaufhängung nach Anspruch 5, **dadurch gekennzeichnet, dass** die für die beiden Radträger (1) gemeinsame Blattfeder (11) an zwei, in der Fahrzeugquerrichtung (y) voneinander beabstandeten karosserieseitigen Lagerstellen (33) gelagert ist.

7. Radaufhängung nach einem der vorhergehenden Ansprüche, **dadurch gekennzeichnet, dass** sich die Blattfeder (11) im Wesentlichen achsparallel zur Wippachse (18) erstreckt.

8. Radaufhängung nach einem der vorhergehenden Ansprüche, **dadurch gekennzeichnet, dass** die karosserieseitige Lagerstelle (33) der Blattfeder (11) in der Fahrzeugquerrichtung (y) im Wesentlichen auf gleicher Höhe wie der karosserieseitige Anbindungspunkt (15) der Spurstange (31) liegt.

## Claims

1. Wheel suspension for a vehicle with a bearing spring (11) and a damper (3) which is connected to a wheel carrier (1) of the vehicle, which is articulated by wheel guiding elements to the vehicle body (9), of which a trailing link (13) carries an additional spring (23) on which the wheel (1) is supported and which counteracts a tilting moment (M_{L}, M_{Q}) produced by the wheel contact force (F_{R}) on the damper (3), wherein the trailing link (13) carrying the additional spring (23) is pivotally mounted on a rocking axis (18), wherein the bearing spring (11) is designed as a leaf spring, and wherein the link assembly guiding the wheel carrier (1) comprises the trailing link (13) and the leaf spring (11), which are arranged in a lower link plane, and wherein the link assembly also has a tie rod (31) which is arranged in an upper link plane, **characterised in that** the leaf spring (11) is articulated as a wheel guiding element to the wheel carrier (1) and carries the additional spring (23) indirectly **in that** the trailing link (13) carrying the additional spring (23) is supported on the leaf spring (11).

2. Wheel suspension according to claim 1, **characterised in that** the leaf spring (11), in particular in the vehicle transverse direction (y) in the manner of a transverse link, is articulated to an attachment point (27) of the wheel carrier (1).

3. Wheel suspension according to claim 1 or 2, **characterised in that** the rocking axis (18) is arranged between the body-side attachment point (15) of the trailing link (13) and the additional spring (23).

4. Wheel suspension according to one of the preceding claims, **characterised in that** the leaf spring (11) is mounted on at least one body-side bearing (33) which is spaced apart by a transverse link length (e) from the wheel carrier-side attachment point (27).

5. Wheel suspension according to one of the preceding claims, **characterised in that** the leaf spring (11) acts as a stabiliser and/or the leaf spring extends in the vehicle transverse direction (y) between opposing wheel carriers (1) of a vehicle axle.

6. Wheel suspension according to claim 5, **characterised in that** leaf spring (11) common to the two wheel carriers (1) is mounted on two body-side bearings (33) that are spaced apart from each other in the vehicle transverse direction (y).

7. Wheel suspension according to one of the preceding claims, **characterised in that** the leaf spring (11) extends substantially axially parallel to the rocking axis (18).

8. Wheel suspension according to one of the preceding claims, **characterised in that** the body-side bearing (33) of the leaf spring (11) in the vehicle transverse direction (y) is located substantially at the same height as the body-side attachment point (15) of the tie rod (31).

## Revendications

1. Suspension de roue pour un véhicule avec un ressort de support (11) et un amortisseur (3), qui est relié à un support de roue (1) du véhicule, qui est articulé, par l'intermédiaire d'éléments de guidage de roue, au niveau de la carrosserie de véhicule (9), parmi lesquels un bras longitudinal (13) supporte un ressort additionnel (23), sur lequel le support de roue (1) prend appui et qui contrecarre un couple de décrochage (M_{L}, M_{Q}), résultant de la force de soulèvement de roue (F_{R}) sur l'amortisseur (3), dans laquelle le bras longitudinal (13) supportant le ressort additionnel (23) est monté de manière à pouvoir pivoter au niveau d'un axe de basculement (18), dans laquelle le ressort de support (11) est réalisé sous la forme d'un ressort à lames, et dans laquelle l'ensemble de bras guidant le support de roue (1) est constitué du bras longitudinal (13) et du ressort à lames (11), lesquels sont disposés dans un plan de bras inférieur, et dans laquelle l'ensemble de bras présente en supplément une barre d'accouplement (31), qui est disposée dans un plan de bras supérieur, **caractérisée en ce que** le ressort à lames (11) est articulé en tant qu'un élément de guidage de roue au niveau du support de roue (1) et supporte le ressort additionnel (23) directement du fait que le bras longitudinal (13) supportant le ressort additionnel (23) prend appui sur le ressort à lames (11).

2. Suspension de roue selon la revendication 1, **caractérisée en ce que** le ressort à lames (11) est articulé, en particulier dans la direction transversale du véhicule (y) à la manière d'un bras transversal, au niveau d'un point de raccordement (27) du support de roue (1).

3. Suspension de roue selon la revendication 1 ou 2, **caractérisée en ce que** l'axe de basculement (18) est disposé entre le point de raccordement (15), situé côté carrosserie, du bras longitudinal (13) et le ressort additionnel (23).

4. Suspension de roue selon l'une des revendications précédentes, **caractérisée en ce que** le ressort à lames (11) est monté au niveau au moins d'un emplacement formant palier (33) situé côté carrosserie, qui est espacé du point de raccordement (27) situé côté support de roue d'une longueur de bras transversal (e).

5. Suspension de roue selon l'une des revendications précédentes, **caractérisée en ce que** le ressort à lames (11) agit en tant que stabilisateur et/ou le ressort à lames s'étend dans la direction transversale du véhicule (y) entre des supports de roue (1) se faisant face d'un essieu de véhicule.

6. Suspension de roue selon la revendication 5, **caractérisée en ce que** le ressort à lames (11) commun aux deux supports de roue (1) est monté au niveau de deux emplacements formant palier (33) situés côté carrosserie espacés l'un de l'autre dans la direction transversale du véhicule (y).

7. Suspension de roue selon l'une des revendications précédentes, **caractérisée en ce que** le ressort à lames (11) s'étend sensiblement de manière axialement parallèle par rapport à l'axe de basculement (18).

8. Suspension de roue selon l'une des revendications précédentes, **caractérisée en ce que** l'emplacement formant palier (33) situé côté carrosserie du ressort à lames (11) se situe dans la direction transversale du véhicule (y) sensiblement à la même hauteur que le point de raccordement (15) situé côté carrosserie de la barre d'accouplement (31).
